# EUROPEAN PATENT APPLICATION

(11) **EP 4 644 329 A1**
(43) Date of publication of application: **05.11.2025**
(21) Application number: 23912667.5
(22) Date of filing: 11.12.2023
(51) Int. Cl.: C01G 53/00, H01M 4/525, H01M 4/505, H01M 10/052, H01M 4/02

(54) **POSITIVE ELECTRODE ACTIVE MATERIAL PRECURSOR FOR RECHARGEABLE LITHIUM BATTERY, MANUFACTURING METHOD OF POSITIVE ELECTRODE ACTIVE MATERIAL USING SAME, AND RECHARGEABLE LITHIUM BATTERY INCLUDING POSITIVE ELECTRODE ACTIVE MATERIAL MANUFACTURED USING SAME**

(30) Priority: 26.12.2022 KR 20220184551
(71) Applicant: RESEARCH INSTITUTE OF INDUSTRIAL SCIENCE & TECHNOLOGY, Pohang-si, Gyeongsangbuk-do 37673 (KR); Posco Future M Co., Ltd., Pohang-si, Gyeongsangbuk-do 37918 (KR)
(72) Inventor: HWANG, Soon Cheol, Pohang-si, Gyeongsangbuk-do 37671 (KR); PARK, Yoon Cheol, Pohang-si, Gyeongsangbuk-do 37673 (KR); HEO, Jeong Heon, Pohang-si, Gyeongsangbuk-do 37664 (KR); KIM, Woo Taek, Pohang-si, Gyeongsangbuk-do 37680 (KR); HONG, Ki Joo, Incheon 21986 (KR)
(74) Representative: Meissner Bolte Partnerschaft mbB
(86) International application number: PCT/KR2023/020330
(87) International publication number: WO 2024/143992

(57) **Abstract**

The present disclosure relates to a precursor of a positive electrode active material for a lithium secondary battery, a method for manufacturing a positive electrode active material using the same, and a lithium secondary battery including the positive electrode active material manufactured thereby. In one embodiment, the precursor of a positive electrode active material for a lithium secondary battery may have a full width at half maximum (FWHM) of a diffraction peak of the (200) plane measured by X-ray diffraction in a range from 0.28° to 1.30°.

## Description

### [Technical Field]

The present embodiments relate to a precursor of a positive electrode active material for a lithium secondary battery, a method for manufacturing a positive electrode active material using the same, and a lithium secondary battery including the positive electrode active material manufactured thereby.

### [Background Art]

Lithium composite metal compounds are commonly used as positive electrode active materials for lithium secondary batteries, and such positive electrode active materials can be manufactured by calcining powder-form raw materials at high temperatures.

The calcination process of the positive electrode active material is carried out by heat treatment at a high temperature for a certain period of time in an atmosphere containing oxygen at a predetermined concentration or higher. In this process, it is necessary to optimize the calcination temperature and holding time in order to reduce process costs.

Productivity can be improved by increasing the filling amount in a saggar during the manufacture of the positive electrode active material. However, if the filling amount is too large, the amount of unreacted residual lithium may increase, and a significant degradation in electrochemical properties may occur due to the instability of the layered structure.

### [Detailed Description of the Invention]

### [Technical Problem]

The present embodiment is directed to providing a precursor of a positive electrode active material for a lithium secondary battery, a method for manufacturing a positive electrode active material using the same, and a lithium secondary battery including the positive electrode active material manufactured thereby, which can minimize the manufacturing cost of the positive electrode active material while ensuring excellent electrochemical properties.

### [Technical Solution]

According to one embodiment, the precursor of a positive electrode active material for a lithium secondary battery may have a full width at half maximum (FWHM) of a diffraction peak of the (200) plane measured by X-ray diffraction in a range from 0.28° to 1.30°.

According to one embodiment, a method for manufacturing a positive electrode active material for a lithium secondary battery may include: preparing a metal hydroxide comprising nickel, cobalt, and manganese; performing a first heat treatment on a mixture of the metal hydroxide and an additive to prepare a metal oxide precursor; preparing a molded body using a mixture of the metal oxide precursor and a lithium raw material; filling the molded body into a refractory crucible and performing a second heat treatment to prepare a sintered body; and crushing and classifying the sintered body.

According to one embodiment, a positive electrode may include: a current collector; and a positive electrode active material layer disposed on at least one surface of the current collector and including the positive electrode active material manufactured using the above-described method.

According to one embodiment, a lithium secondary battery may include the positive electrode.

### [Advantageous Effects of the Invention]

According to the present embodiment, it is possible to implement a positive electrode active material for a lithium secondary battery that ensures excellent electrochemical properties while increasing yield, by preparing a molded body using a metal oxide precursor obtained by performing a first heat treatment on a hydroxide in the form of an oxide, and subsequently carrying out a calcination process to produce the positive electrode active material.

In addition, since the filling amount inside the refractory crucible (saggar) can be increased during calcination, the manufacturing cost of the positive electrode active material can be minimized, thereby significantly improving economic efficiency.

### [Brief Description of the Drawings]

FIG. 1 is an SEM analysis result at 15,000× magnification of the positive electrode active material precursor prepared according to Example 1.
FIG. 2 is an SEM analysis result at 15,000× magnification of the positive electrode active material precursor prepared according to Comparative Example 2.
FIG. 3 is an SEM analysis result at 15,000× magnification of the positive electrode active material precursor prepared according to Comparative Example 3.

### [Best Mode for the Invention]

The terms such as "first," "second," and "third," etc., may be used to describe various parts, components, regions, layers, and/or sections, but are not limited thereto. These terms are merely used to distinguish one element from another, and thus, a "first" element, component, region, layer, or section described below may be referred to as a "second" element, component, region, layer, or section without departing from the scope of the present invention.

The terminology used herein is intended to describe specific embodiments only and is not intended to limit the scope of the invention. The singular forms used herein are intended to include the plural forms as well, unless the context clearly indicates otherwise. The term "comprising/including/containing/having/involving" as used in this specification, specifies the presence of stated features, regions, integers, steps, operations, elements, and/or components, but does not preclude the presence or addition of one or more other features, regions, integers, steps, operations, elements, and/or components.

When a part is referred to as being "on" or "above/over" another part, it may be directly on or over the other part, or intervening elements may be present therebetween. In contrast, when a part is referred to as being "directly on" or "directly above/over" another part, there are no intervening elements present.

Unless otherwise defined, all technical and scientific terms used herein have the same meaning as commonly understood by one of ordinary skill in the art to which this invention belongs. Conventionally used terms defined in general dictionaries should be interpreted as having a meaning consistent with their usage in the relevant technical field and the context of this disclosure, and are not to be interpreted in an idealized or overly formal sense unless expressly so defined herein.

Unless specifically stated otherwise, all percentages are expressed in weight percent (wt%), and 1 ppm means 0.0001 wt%.

Hereinafter, embodiments of the present invention will be described in detail so that those of ordinary skill in the art can easily carry out the invention. However, the present invention may be implemented in various different forms and is not limited to the embodiments described herein.

Detailed embodiments of the present invention are as follows.

In one embodiment, a precursor of a positive electrode active material for a lithium secondary battery may have a full width at half maximum (FWHM) of the diffraction peak of the (200) plane measured by X-ray diffraction in a range from 0.28° to 1.30°, and more specifically from 0.28° to 1.15°. In addition, the crystallite size of the precursor may be in a range from 23 nm to 95 nm, and more specifically from 25 nm to 65 nm. When the FWHM of the (200) plane and the crystallite size satisfy the above ranges, it is possible to increase the packing density during the manufacturing process, thereby improving the productivity of the positive electrode active material.

The specific surface area (BET) of the positive electrode active material precursor may be in a range from 20 m²/g to 80 m²/g, and more specifically from 20 m²/g to 60 m²/g. When the specific surface area falls within the above range, excessive pore formation in the precursor can be suppressed, and thus, when the resulting positive electrode active material is applied to a battery, side reactions with the electrolyte can be minimized, leading to excellent electrochemical characteristics.

The tap density of the positive electrode active material precursor may be in a range from 1.9 g/cc to 2.3 g/cc. When the tap density satisfies this range, a positive electrode active material with excellent electrochemical properties such as cycle life and resistance characteristics can be achieved.

The average particle diameter (D50) of the positive electrode active material precursor may be in a range from 2 µm to 7 µm, and more specifically from 3 µm to 6 µm. When the average particle diameter falls within the above range, lithium-ion diffusion is accelerated, thereby providing superior electrochemical performance.

The metal oxide may be represented by the following Chemical Formula 1:

[Chemical Formula 1] Liₐ[NiₓCo_{γ}M_{1₁}M_{2₂}]O₂

In Chemical Formula 1, M₁ is Mn or Al, and M₂ is at least one selected from the group consisting of Al, Mg, Ti, Nb, W, Sc, Zr, Si, V, Fe, Y, and Mo.

In Chemical Formula 1, lithium is included in an amount corresponding to a, which may range from 0.8 to 1.2. If a is too small, the capacity may be reduced, and if a is too large, the strength of the calcined positive electrode active material may become excessively high, making pulverization difficult, and leading to an increase in lithium by-products and gas generation. Considering the improvement in capacity characteristics due to lithium content control and the sinterability balance during active material synthesis, the lithium content is preferably in a range from 0.9 to 1.1.

In Chemical Formula 1, nickel is included in an amount corresponding to x, which may range from 0.80 to less than 1. When x is 0.80 or greater, a sufficient amount of nickel can be secured to contribute to charge/discharge reactions, thereby enabling high capacity. More specifically, x may range from 0.87 to less than 1. When the nickel content satisfies this range, a positive electrode active material with high output characteristics can be realized. In particular, when the nickel content is 0.87 mol or more, the resulting positive electrode active material can achieve high energy density per volume, thereby enhancing battery capacity and making it highly suitable for electric vehicle applications.

In Chemical Formula 1, cobalt is included in an amount corresponding to y, which may range from greater than 0 to 0.2. Cobalt can enhance battery capacity and cycle life. More specifically, the cobalt content may range from 0.01 to 0.1.

In Chemical Formula 1, manganese is included in an amount corresponding to z₁, which may range from greater than 0 to 0.2. Manganese improves the structural stability of the positive electrode active material and thereby enhances the safety of the battery. More specifically, the manganese content may be in a range from 0.01 to 0.1.

In Chemical Formula 1, M₂ is a doping element. The doping element M₂ may be included in an amount corresponding to z₂, which may range from 0 to 0.2. For positive electrode active materials, the selection of a doping element is critical for achieving cycle life and various electrochemical performances. In the present embodiment, various doping elements as described above are applied to improve the characteristics of the positive electrode active material. More specifically, the content of the doping element may range from 0.001 to 0.08.

According to one embodiment, a method for manufacturing a positive electrode active material for a lithium secondary battery may include the steps of: preparing a metal hydroxide comprising nickel, cobalt, and manganese; performing a first heat treatment on a mixture of the metal hydroxide and an additive to prepare a metal oxide precursor; preparing a molded body using a mixture of the metal oxide precursor and a lithium raw material; filling the molded body into a refractory crucible and performing a second heat treatment to produce a sintered body; and crushing and classifying the sintered body.

First, a metal hydroxide comprising nickel, cobalt, and manganese is prepared. The metal hydroxide may be synthesized by conventional methods known in the art, such as a solid-state reaction, co-precipitation, sol-gel method, or hydrothermal synthesis. For example, in the case of co-precipitation, a metal salt aqueous solution comprising a nickel raw material, a cobalt raw material, a manganese raw material, and water is prepared, and the metal hydroxide can be obtained by supplying the solution into a co-precipitation reactor.

Next, the method includes performing a first heat treatment on a mixture of the metal hydroxide and an additive to prepare a metal oxide precursor. The additive may be at least one selected from the group consisting of oxides, hydroxides, nitrates, and combinations thereof of Zr, Ti, W, Al, Mg, V, Co, and Ni. The first heat treatment may be performed at a temperature in the range of 310°C to 590°C, or more specifically from 350°C to 550°C, for a duration of 1 to 10 hours. When the first heat treatment is carried out under these conditions, it is possible to secure the desired packing density described below.

The physical properties of the resulting metal oxide precursor-i.e., FWHM, crystallite size, specific surface area, tap density, and average particle diameter-are the same as described above and will not be repeated here.

Subsequently, a molded body is prepared using a mixture of the metal oxide precursor and a lithium raw material. The lithium-to-metal (Li/Me) molar ratio in the mixture, excluding lithium, may be in the range of 1.0 to 1.1, or more specifically from 1.01 to 1.08. The molding step may be carried out using at least one of a disk pelletizer, intensive mixer, briquetting machine, press, spray dryer, or extruder.

The packing density of the molded body may be in the range of 1.0 g/cc to 2.5 g/cc. When the packing density satisfies this range, the amount filled into the refractory crucible during calcination can be increased, thereby improving the productivity of the positive electrode active material.

Next, the molded body is charged into a refractory crucible and subjected to a second heat treatment to produce a sintered body. The second heat treatment may be carried out at a temperature in the range of 850°C to 950°C for 10 to 30 hours. When the temperature and time of the second heat treatment satisfy the above conditions, cation mixing can be suppressed, and the structural stability of the layered oxide positive electrode active material can be improved. As a result of the enhanced structural stability, improvements in cycle life, output characteristics, and resistance can be achieved.

Finally, the sintered body is subjected to a crushing and classifying step to obtain the positive electrode active material for a lithium secondary battery according to the present embodiment.

In one embodiment, a positive electrode includes a current collector and a positive electrode active material layer disposed on one surface of the current collector, wherein the positive electrode active material layer comprises the positive electrode active material manufactured according to the method described above. The characteristics of the positive electrode active material used in the positive electrode active material layer are as described above and will not be repeated here.

The current collector may be, for example, stainless steel, aluminum, nickel, titanium, sintered carbon, or surface-treated aluminum or stainless steel coated with carbon, nickel, titanium, silver, or the like.

The positive electrode active material layer may optionally include a binder and a conductive material. The binder improves adhesion between active material particles and between the active material and the current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene monomer rubber (EPDM rubber), sulfonated EPDM, styrene-butadiene rubber (SBR), fluororubber, and various copolymers thereof. One or more of these may be used in combination, without limitation. The binder may be included in an amount of 1 to 30 wt% based on the total weight of the positive electrode active material layer.

The conductive material imparts electronic conductivity to the electrode and may be any material that does not cause chemical changes in the battery. Examples include graphite (natural or artificial), carbon-based materials such as carbon black, acetylene black, ketjen black, channel black, furnace black, lamp black, thermal black, and carbon fibers; metal powders or fibers such as copper, nickel, aluminum, and silver; conductive whiskers such as zinc oxide and potassium titanate; conductive metal oxides such as titanium oxide; or conductive polymers such as polyphenylene derivatives. One or more of these may be used in combination. The conductive material may be included in an amount of 1 to 30 wt% based on the total weight of the positive electrode active material layer.

Except for the use of the above-described positive electrode active material, the positive electrode may be manufactured by a conventional method. Specifically, a slurry composition comprising the positive electrode active material, optionally a binder and/or conductive material, and a solvent may be coated on the current collector, followed by drying and rolling. The types and contents of the active material, binder, and conductive material are as described above.

The solvent may be any conventional solvent used in the art, such as dimethyl sulfoxide (DMSO), isopropyl alcohol, N-methylpyrrolidone (NMP), acetone, or water. One or more of these may be used in combination. The amount of solvent should be sufficient to dissolve or disperse the active material, binder, and conductive agent and to provide a viscosity suitable for uniform coating thickness.

Alternatively, the composition for forming the positive electrode active material layer may be cast onto a separate support, and a film obtained by peeling it off may be laminated onto the current collector.

In one embodiment, a lithium secondary battery is provided that includes the above-described positive electrode. The lithium secondary battery may include the positive electrode, a negative electrode disposed opposite the positive electrode, a separator interposed between the positive and negative electrodes, and an electrolyte.

The battery may further include a battery case housing the electrode assembly of the positive electrode, negative electrode, and separator, and a sealing member for sealing the case.

The negative electrode may include a negative electrode current collector and a negative electrode active material layer disposed on the current collector. The current collector may be any electrically conductive material that does not cause chemical changes in the battery, such as copper, stainless steel, aluminum, nickel, titanium, sintered carbon, or surface-treated copper/stainless steel with carbon, nickel, titanium, silver, or the like. It may also be made of aluminum-cadmium alloy. The current collector typically has a thickness of 3 to 500 µm and may have a roughened surface to improve adhesion of the active material. Forms such as films, sheets, foils, nets, porous bodies, foams, and non-woven fabrics may be used.

The negative electrode active material layer may optionally include a binder and/or a conductive material, in addition to the negative electrode active material. The layer may be formed by coating a composition containing these components onto the negative current collector, followed by drying, or by casting the composition onto a separate support, peeling it off, and laminating it onto the current collector.

The negative electrode active material may be a compound capable of reversibly intercalating and deintercalating lithium. Examples include carbonaceous materials such as artificial graphite, natural graphite, graphitized carbon fibers, and amorphous carbon; metal-based materials such as Si, Al, Sn, Pb, Zn, Bi, In, Mg, Ga, Cd, and alloys of Si, Sn, or Al; metal oxides such as SiOₓ (0 < x < 2), SnO₂, vanadium oxide, and lithium vanadium oxide; or composites such as Si-C or Sn-C. One or more of these materials may be used, and metal lithium foil may also be used. Carbon materials may include low-crystalline and high-crystalline types. Low-crystalline carbons include soft carbon and hard carbon. High-crystalline carbons include amorphous, flake, platelet, spherical, and fibrous natural or artificial graphite; Kish graphite; pyrolytic carbon; mesophase pitch-based carbon fibers; meso-carbon microbeads; mesophase pitches; and petroleum or coal tar pitch-derived cokes.

The binder and conductive material may be the same as those described for the positive electrode.

A separator may be interposed between the positive and negative electrodes. The separator may include polyethylene, polypropylene, polyvinylidene fluoride, or a multilayer film of two or more of these materials. Examples include a polyethylene/polypropylene bilayer separator, a polyethylene/polypropylene/polyethylene trilayer separator, or a polypropylene/polyethylene/polypropylene trilayer separator.

The electrolyte may include an organic liquid electrolyte, inorganic liquid electrolyte, solid polymer electrolyte, gel-type polymer electrolyte, solid inorganic electrolyte, or molten inorganic electrolyte.

Specifically, the organic liquid electrolyte may include an organic solvent and a lithium salt. The organic solvent may be any solvent capable of serving as a medium for ion movement in electrochemical reactions. Examples include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohols such as ethanol and isopropyl alcohol; nitriles such as R-CN (where R is a C₂-C₂₀ linear, branched, or cyclic hydrocarbon group, optionally containing a double bond, aromatic ring, or ether bond); amides such as dimethylformamide; dioxolanes such as 1,3-dioxolane; and sulfolanes.

Among them, carbonate-based solvents are preferred, particularly a mixture of cyclic carbonates (e.g., EC, PC) and linear carbonates (e.g., EMC, DMC, DEC) at a volume ratio of about 1:1 to 1:9.

The lithium salt may be any compound capable of providing lithium ions, such as LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The lithium salt concentration is preferably in the range of 0.1 to 2.0 M. Within this range, the electrolyte can have appropriate conductivity and viscosity, resulting in excellent performance and efficient lithium ion mobility.

As described above, the lithium secondary battery comprising the positive electrode active material of the present invention exhibits excellent discharge capacity, output characteristics, and capacity retention, and thus is useful in portable devices such as mobile phones, laptop computers, and digital cameras, as well as in electric vehicles such as hybrid electric vehicles (HEVs).

### [Mode for the Invention]

Hereinafter, embodiments of the present invention will be described in detail. However, these are presented by way of example only and are not intended to limit the scope of the invention, which is defined only by the claims.

### Example 1

### (1) Preparation of Metal Oxide Precursor

A precursor was prepared by a general co-precipitation method.

Specifically, NiSO₄·6H₂O was used as the nickel raw material, CoSO₄·7H₂O as the cobalt raw material, and MnSO₄·H₂O as the manganese raw material. These raw materials were dissolved in distilled water to prepare a metal salt aqueous solution.

After preparing a co-precipitation reactor, N₂ was purged to prevent oxidation of metal ions during the co-precipitation reaction, and the reactor temperature was maintained at 50°C. NH₄OH was added as a chelating agent, and NaOH was used to adjust the pH. The precipitate obtained from the co-precipitation process was filtered, washed with distilled water, and dried at 100°C for 24 hours to obtain a metal hydroxide.

The composition of the prepared metal hydroxide was (Ni_{0.96}Co_{0.03}Mn_{0.01})(OH)₂.

The metal hydroxide was mixed with ZrO₂ as an additive, and the mixture was charged into a mullite saggar. It was then placed in a furnace under an oxygen atmosphere and subjected to a first heat treatment at 500°C to prepare a metal oxide precursor.

### (2) Preparation of Positive Electrode Active Material

The metal oxide precursor prepared in step (1), lithium raw material (LiOH), and water were mixed and fed into a disk pelletizer to produce spherical molded bodies having an average diameter of 3 mm. The molar ratio of lithium (Li) to total metal (Me) was adjusted to 1.05.

The molded bodies were charged into a mullite saggar and then subjected to a second heat treatment at 900°C in a sintering furnace under an oxygen atmosphere. The resulting sintered material was crushed and classified to obtain a positive electrode active material for a lithium secondary battery.

### Example 2

### (1) Preparation of Metal Oxide Precursor

A metal oxide precursor was prepared in the same manner as in Example 1, except that the first heat treatment temperature was changed to 350°C.

### (2) Preparation of Positive Electrode Active Material

The positive electrode active material for a lithium secondary battery was prepared in the same manner as in Example 1.

### Example 3

### (1) Preparation of Metal Oxide Precursor

A metal oxide precursor was prepared in the same manner as in Example 1, except that the first heat treatment temperature was changed to 550°C.

### (2) Preparation of Positive Electrode Active Material

The positive electrode active material for a lithium secondary battery was prepared in the same manner as in Example 1.

### Comparative Example 1

### (1) Preparation of Metal Hydroxide Precursor

A positive electrode active material precursor composed of a metal hydroxide was prepared in the same manner as in Example 1.

### (2) Preparation of Positive Electrode Active Material

The precursor prepared in step (1), ZrO₂ as an additive, lithium raw material (LiOH), and water were mixed and charged into a saggar. The mixture was sintered at 900°C in a furnace under an oxygen atmosphere. The resulting sintered material was crushed and classified to obtain a positive electrode active material for a lithium secondary battery.

### Comparative Example 2

### (1) Preparation of Metal Oxide Precursor

A metal oxide precursor was prepared in the same manner as in Example 1, except that the first heat treatment temperature was changed to 300°C.

### (2) Preparation of Positive Electrode Active Material

The positive electrode active material for a lithium secondary battery was prepared in the same manner as in Example 1.

### Comparative Example 3

### (1) Preparation of Metal Oxide Precursor

A metal oxide precursor was prepared in the same manner as in Example 1, except that the first heat treatment temperature was changed to 600°C.

### (2) Preparation of Positive Electrode Active Material

The positive electrode active material for a lithium secondary battery was prepared in the same manner as in Example 1.

### Experimental Example 1 - Measurement of Packing Density

The packing density was measured for (i) the molded bodies prepared using a disk pelletizer in Example 1 for the purpose of preparing a positive electrode active material, and (ii) the mixture of precursor, additive, and lithium raw material used in Comparative Example 1. The results are shown in Table 1 below.

**[Table 1]**

| Type | Packing Density (g/cc) |
|---|---|
| Example 1 | 1.2 |
| Comparative Example 1 | 0.8 |

Referring to Table 1, it can be seen that the packing density of the molded body prepared in Example 1 increased by more than 1.5 times compared to the mixture prepared in Comparative Example 1. Accordingly, when using the positive electrode active material of Example 1, the charge loading per calcination cycle can be increased, thereby improving calcination productivity.

### Experimental Example 2 - Measurement of Electrochemical Properties

### (1) Preparation of Coin Half-Cells

Coin-type half cells (CR2032) were fabricated using the positive electrode active materials prepared in the above Examples and Comparative Examples, followed by electrochemical evaluation.

Specifically, the positive electrode active material, a conductive agent (Super P), and a binder (polyvinylidene fluoride, PVdF) were mixed in a weight ratio of 96:2:2. This mixture was added to N-methyl-2-pyrrolidone (NMP) to prepare a positive electrode slurry with a solid content of approximately 30 wt%.

The slurry was coated onto an aluminum foil (Al foil, thickness: 15 µm) current collector using a doctor blade, dried under vacuum at 120°C for 5 hours, and then roll-pressed to fabricate the positive electrode.

The positive electrode, a lithium metal counter electrode (thickness: 300 µm, MTI), an electrolyte, and a polypropylene separator were assembled into CR2032 coin-type half cells using conventional methods.

The electrolyte was prepared by dissolving 1 M LiPF₆ in a mixed solvent of ethylene carbonate (EC), dimethyl carbonate (DMC), and ethyl methyl carbonate (EMC) at a volume ratio of EC:DMC:EMC = 3:4:3. The assembled coin cells were aged at room temperature for 12 hours prior to electrochemical testing.

### (2) XRD Analysis - FWHM and Crystallite Size

X-ray diffraction (XRD) analysis was performed on the positive electrode active materials prepared in the Examples and Comparative Examples using an X'pert Pro diffractometer (PANalytical) with Cu Kα radiation (λ = 1.54056 Å).

The full width at half maximum (FWHM) of the (200) diffraction peak (located at 20 ≈ 43-44°) was measured. Crystallite size was also determined using the same instrument.

The results are summarized in Table 2 below.

### (3) Discharge Capacity Evaluation

The theoretical capacity was set at 200 mAh/g. Charge/discharge conditions were constant current/constant voltage (CC/CV) between 3.0 V and 4.3 V with a 1/20C cutoff. The discharge capacity was measured under 0.1C charge / 0.1C discharge conditions.

The results are presented in Table 2.

### (4) BET Surface Area Measurement

The specific surface area (BET) of the positive electrode active materials prepared in the Examples and Comparative Examples was measured using a Micromeritics TriStar II 3020 analyzer.

### (6) Tap Density Measurement

Tap density was measured by weighing 10 g of each active material powder, loading it into a dedicated container, tapping 3,000 times using a JEL STAV II Jolting Volumeter, and calculating the tap density by dividing the mass by the resulting volume.

### (7) Average Particle Diameter (D50) Measurement

The average particle diameter (D50) was measured using a particle size analyzer (PSA) from Microtrac.

**[Table 2]**

| Type | First Heat Treatment Temperature (°C) | XRD (200) FWHM (°) | Discharge Capacity (mAh/g) | Crystallite Size (nm) | BET Surface Area (m²/g) | Tap Density (g/cc) | Average Particle Diameter (D50, µm) |
|---|---|---|---|---|---|---|---|
| Example 1 | 500 | 0.4568 | 209.3 | 60.4 | 28.7 | 1.9 | 5 |
| Example 2 | 350 | 1.0377 | 207.5 | 27.9 | - | - | - |
| Example 3 | 550 | 0.304 | 209.3 | - | - | - | - |
| Comparative Example 2 | 300 | 1.3248 | 205.5 | 22.1 | 151.6 | 1.86 | 6 |
| Comparati ve Example 3 | 600 | 0.2632 | 206.2 | 98.4 | 11.4 | 1.87 | 4.8 |

Referring to Table 2, it can be seen that the (200) FWHM, crystallite size, BET surface area, tap density, and average particle diameter (D50) of the positive electrode active materials in Examples 1 to 3 fall within the proposed ranges. In addition, the discharge capacities of the positive electrode active materials prepared in Examples 1 to 3 were higher than those prepared in Comparative Examples 2 and 3, indicating that the active materials of the Examples exhibit superior electrochemical performance.

### Experimental Example 3 - Particle Morphology Analysis

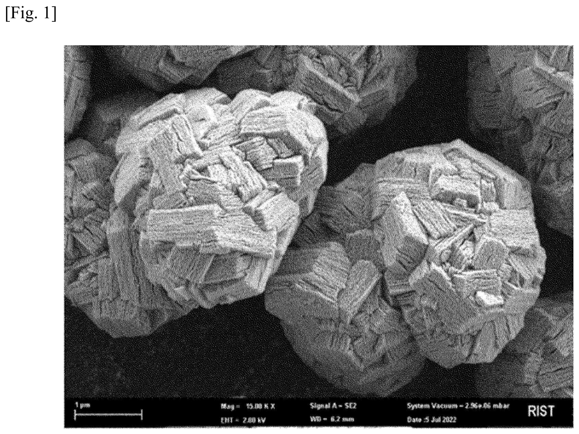

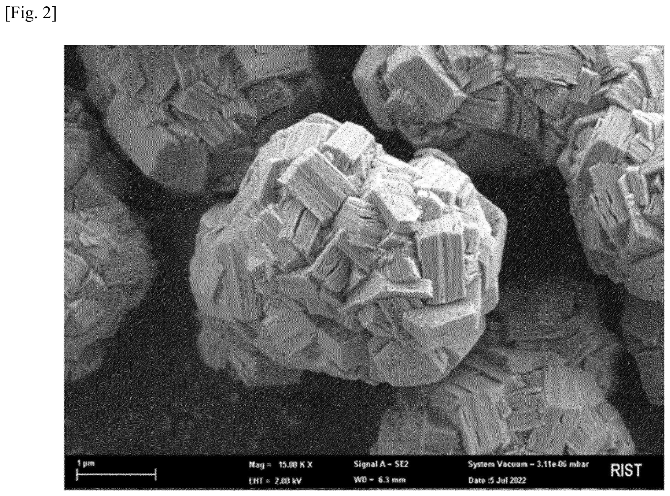

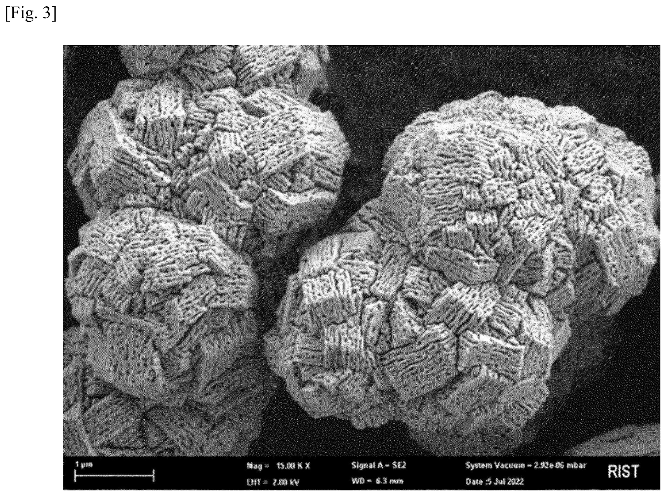

FIG. 1 is an SEM image of the positive electrode active material prepared in Example 1 at a magnification of 15,000×. FIG. 2 is an SEM image of the positive electrode active material prepared in Comparative Example 2 at a magnification of 15,000×. FIG. 3 is an SEM image of the positive electrode active material prepared in Comparative Example 3 at a magnification of 15,000×.

Referring to FIGS. 1 to 3, the positive electrode active material of Example 1 shows the presence of fine pores on the surface of the particles. In contrast, the active material of Comparative Example 2 shows almost no observable pores on the particle surface, while the active material of Comparative Example 3 exhibits excessively large pores on the surface.

Based on the above results, it can be confirmed that when the positive electrode active material precursor for a lithium secondary battery according to one embodiment of the present invention is used, the fillable volume in the saggar during the calcination process can be increased, thereby improving productivity, while also achieving excellent electrochemical properties.

The present invention is not limited to the above-described embodiments, and various modifications may be made without departing from the technical spirit of the invention. Those skilled in the art will understand that the invention may be practiced in other specific forms without departing from the essential characteristics of the invention. Therefore, it should be understood that the above-described embodiments are illustrative in all respects and not restrictive.

## Claims

1. A precursor of a positive electrode active material for a lithium secondary battery, wherein a full width at half maximum (FWHM) of a diffraction peak of the (200) plane measured by X-ray diffraction is in a range from 0.28° to 1.30°.

2. The precursor of a positive electrode active material for a lithium secondary battery of claim 1, wherein a crystallite size of the precursor is in a range from 23 nm to 95 nm.

3. The precursor of a positive electrode active material for a lithium secondary battery of claim 1, wherein a specific surface area (BET) of the precursor is in a range from 20 m²/g to 80 m²/g.

4. The precursor of a positive electrode active material for a lithium secondary battery of claim 1, wherein a tap density of the precursor is in a range from 1.9 g/cc to 2.3 g/cc.

5. The precursor of a positive electrode active material for a lithium secondary battery of claim 1, wherein an average particle diameter (D50) of the precursor is in a range from 2 µm to 7 µm.

6. The precursor of a positive electrode active material for a lithium secondary battery of claim 1, wherein the metal oxide is represented by the following Chemical Formula 1:
[Chemical Formula 1] Liₐ[NiₓCo_{γ}M_{1₁}M_{2₂}]O₂,
wherein M₁ is Mn or Al,
M₂ is at least one selected from the group consisting of Al, Mg, Ti, Nb, W, Sc, Zr, Si, V, Fe, Y, and Mo,
0.8 ≤ a ≤ 1.2, 0.80 ≤ x < 1,0 < y ≤ 0.2, 0 < z₁ ≤ 0.2, 0 ≤ z₂ ≤ 0.2, and x + y + z₁ + z₂ = 1.

7. The precursor of a positive electrode active material for a lithium secondary battery of claim 6, wherein x is in a range from 0.87 to less than 1 in the Chemical Formula 1.

8. A method for manufacturing a positive electrode active material for a lithium secondary battery, comprising:
preparing a metal hydroxide comprising nickel, cobalt, and manganese;
performing a first calcination on a mixture of the metal hydroxide and an additive to prepare a metal oxide precursor;
preparing a molded body using a mixture of the metal oxide precursor and a lithium raw material;
filling the molded body into a refractory crucible and performing a second calcination to produce a sintered body; and
crushing and classifying the sintered body.

9. The method of claim 8, wherein the additive used in the step of preparing the metal oxide precursor is at least one selected from the group consisting of oxides, hydroxides, nitrates, and combinations thereof of Zr, Ti, W, Al, Mg, V, Co, and Ni.

10. The method of claim 8, wherein the first calcination is performed at a temperature in a range from 310°C to 590°C for a duration of 1 hour to 10 hours.

11. The method of claim 8, wherein in the step of preparing the molded body, the filling density of the molded body is in a range from 1.0 g/cc to 2.5 g/cc.

12. The method of claim 8, wherein the step of preparing the molded body is performed using at least one selected from a disk pelletizer, an intensive mixer, a briquetting machine, a press, a spray dryer, and an extruder.

13. The method of claim 8, wherein the second calcination is performed at a temperature in a range from 850°C to 950°C for a duration of 10 hours to 30 hours in the step of producing the sintered body.

14. A positive electrode for a lithium secondary battery, comprising:
a current collector; and
a positive electrode active material layer disposed on at least one surface of the current collector and comprising the positive electrode active material manufactured according to any one of claims 8 to 13.

15. A lithium secondary battery comprising the positive electrode of claim 14.
